# EUROPEAN PATENT SPECIFICATION

(11) **EP 0 283 921 B1**
(45) Date of publication and mention of the grant of the patent: **05.01.1994**
(21) Application number: 88104206.3
(22) Date of filing: 16.03.1988
(51) Int. Cl.: G11B 17/028, G11B 23/00

(54) **Disk drive device**
Plattenantriebsgerät
Dispositif d'entraînement de disque

(30) Priority: 20.03.1987 JP 67021/87
(43) Date of publication of application: 28.09.1988
(73) Proprietor: SONY CORPORATION, Tokyo 141 (JP)
(72) Inventor: Iwata, Hirokimi c/o Sony Corporation, Shinagawa-ku Tokyo (JP); Naito, Takashi c/o Sony Corporation, Shinagawa-ku Tokyo (JP)
(74) Representative: TER MEER STEINMEISTER & PARTNER GbR

(56) References cited:
- EP-A- 0 026 475
- EP-A- 0 086 682
- EP-A- 0 230 963
- EP-A- 0 233 644
- AU-B- 543 176
- DE-A- 2 408 849
- US-A- 4 458 278

## Description

### BACKGROUND OF THE INVENTION

### Field of the Invention

This invention relates to a disk drive device adapted for driving a disk, such as an optical disk or an opto-magnetic disk, into rotation, wherein the disk is formed by a main body on the major surface of which is mounted a hub having a center opening in which a center, spindle is engaged.

### Description of the Prior Art

There has so far been known a disk recording and/or reproducing apparatus employing an optical disk adapted for writing and/or reading prescribed information signals with the aid of optical means, or an opto-magnetic disk adapted for writing and/or reading prescribed information signals with the aid of optical means and magnetic means. The opto-magnetic disk employed for the disk recording and/or reproducing apparatus is accommodates wthin the cartridge to prevent flaw formation or to prevent dust and dirt from affixing to the disk surface during handling operations such as disk mounting and dismounting operations to and from the apparatus. The disk cartridge accommodating the opto-magnetic disk has an opening for rotatably accommodating the disk and recording and/or reproducing signals to and from the disk.

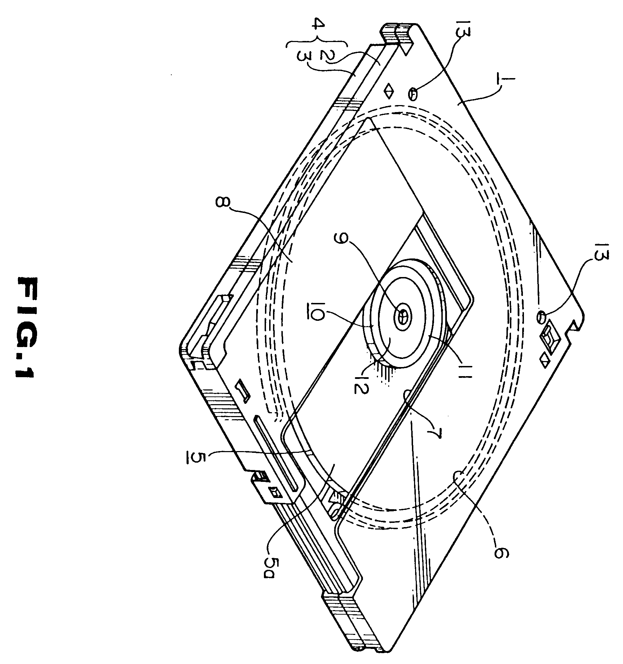

In the disk cartridge 1, shown in Fig. 1, the aforementioned disk 5 is accommodated in a cartridge 4 composed of an upper half 2 and a lower half 3 abutted and connected to each other. Within the cartridge 4, there is formed a disk container 6 having a diameter and a thickness layer than the outside diameter and the thickness of the disk 5, respectively, and the disk 5 is contained rotatably within this disk container 6. On the upper and lower sides of the cartridge 4, there is formed an opening 7 extending from the central part towards the front side of the cartridge 4 and which is confronted by a disk table of a disk drive unit disposed within a recording and/or reproducing apparatus to be fitted with the disk cartridge 1 and by an optical pickup device adapted for writing and/or reading prescribed information signals to and from the disk. This opening 7 is closed by a shutter 8 slidably mounted to the cartridge 4 and opened only during the time of use when the disk cartridge 1 is mounted within the recording and/or reproducing apparatus. During the time of non-use, the opening 7 is closed by the shutter 8 to prevent intrusion of dust and dirt into the cartridge 4 and contact of the user's hand or finger with the signal recording surface of the disk 5, as well as preventing occurrence of writing and/or reading errors of the information signals caused by deposition of dust and dirt on the signal recording surface of the disk 5.

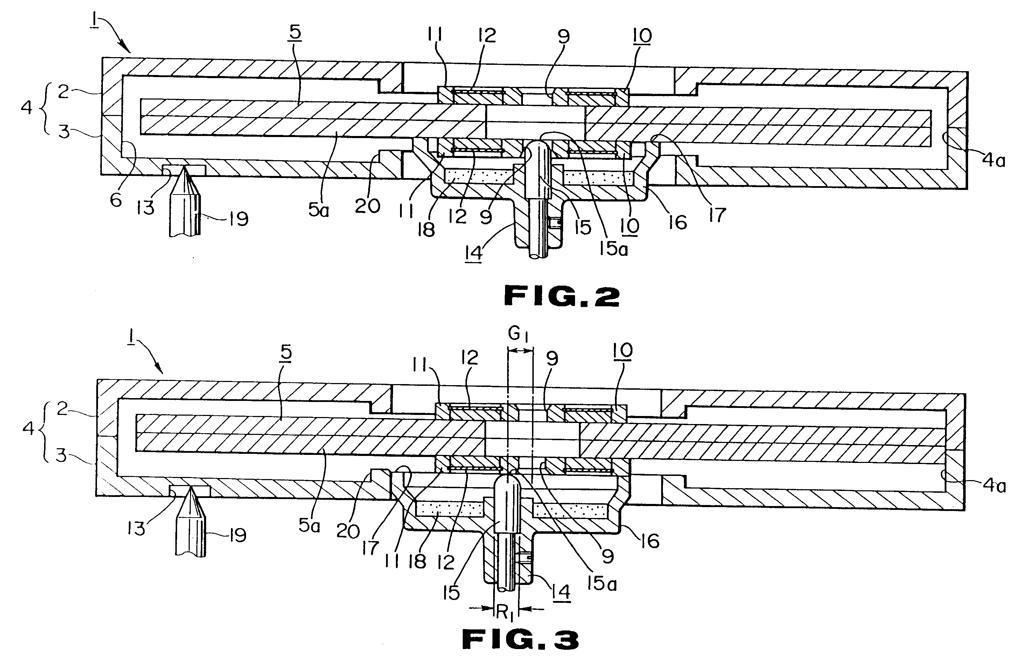

The signal recording surface of the disk 5 is formed on a main body of the disk 5a mainly composed of a base plate formed of synthetic resin. At the center of both major surfaces of the disk substrate 5a, there are mounted hubs 10 provided with center apertures 9 in which a center spindle of the disk drive unit is engaged as shown in Figs. 1 and 2. These hubs 10 are each formed by a ring member 11 formed of synthetic material and a metallic plate 12 exhibiting magnetic attractive properties and integrally mounted to one side of the ring member 11.

The above described disk cartridge 1 is mounted in position within the magnetic recording and/or reproducing apparatus with positioning pins 19 within the apparatus engaging by disk cartridge loading means, not shown, within positioning holes 13 formed in the outer lateral sides of the cartridge 4, as shown in Fig. 2.

The disk 5 within the disk cartridge 1 is attached to the disk drive unit 14 arranged and constructed as shown in Fig. 2. The disk drive unit 14 includes the center spindle 15 which is engaged in the center apertures 9 provided in the hubs 10 of the disk 5 and to which the drive power is transmitted from a rotary drive source, not shown, either directly or indirectly through transmission means, also not shown. The disk table 16 is mounted to the outer periphery of the center spindle 15 for rotation in unison with the center spindle 15. The disk table 16 has its upper outer peripheral side formed as a disk supporting surface 17 supporting the major surface of the main body of the disk 5 in the vicinity of the hubs 10. The disk table also has a ring-shaped magnet 18 on its inner periphery for generating a uniform magnetic field centered about the center spindle 15 for attracting the metallic plate 12 attached to the hub 10.

It is noted that the disk table 16 has a diameter lesser than that of the non-signal recording area provided on the inner periphery of the main body of the disk 5a, so that the signal record area will face to the optical pickup device when the disk table supports the disk 5.

The disk 5 is lowered onto the disk table 16 of the above disk drive unit 14 so as to follow up with the descent of the cartridge 4 onto the positioning pin 19 as the metallic plate 12 attached to the hubs 10 is attracted by the magnet 18.

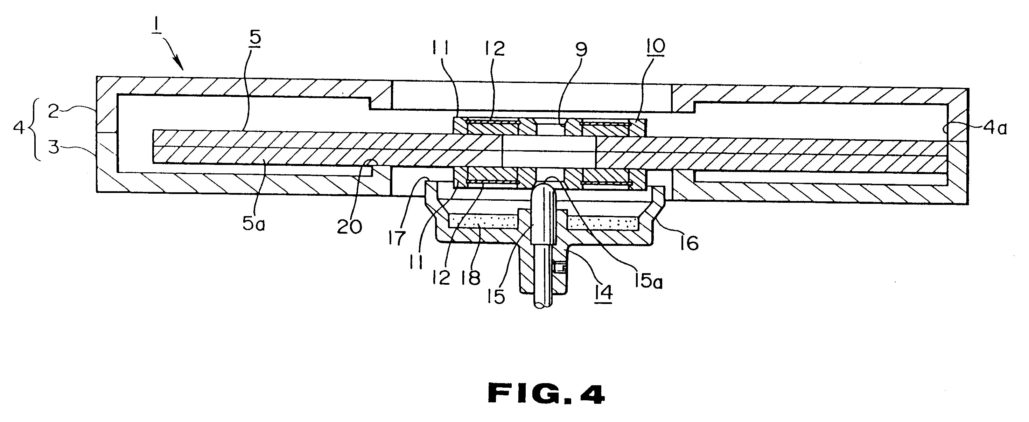

It is noted that, while the cartridge 4 is lowered onto the positioning pins 19 and the disk 5 is lowered onto the disk table 16, the disk 5 is maintained in its horizontal position, as the non-signal record area on its inner perimeter around the hubs 10 is supported on a disk supporting rib 20 projecting on the inner periphery of the cartridge 4, as shown in Fig. 4.

As the cartridge 4 is lowered onto the positioning pins 19, the disk 5 is lowered onto the disk table 16, with the outer periphery of the main body of the disk 5a being guided on the inner wall 4a of the cartridge 4 constituting the disk container 6. At this time, the one side of the hub 10 abuts on the forward end of the center spindle 15. The cartridge 4 is then mounted to the positioning pins 19, with the major surface of the main body of the disk 5a about the hub 10 being supported on the disk supporting surface 17 on the upper side of the disk table 16. At this time, the disk 5 clears the disk supporting rib 20 within the cartridge 4 so as to be floated within the cartridge 4. As the disk 5 is floated within the cartridge 4 with the hub 10 abutting on the forward end of the center spindle 15 and the disk being supported by the disk table 16, the metallic plate 12 attached to the hub 10 is subjected to the force of magnetic attraction by the magnet 17. Under this force of magnetc attraction, the disk 5 is shifted horizontally so that the center opening 9 is aligned with the center spindle 15 to permit the center spindle 15 to be engaged in the center opening 15. The disk 5 is mounted to the disk drive unit as the major surface of the main body of the disk 5a around the hub 10 is supported by the overall disk supporting surface 17 on the upper side of the disk table 16. In this manner, the disk 5 is mounted integrally to the disk table 16 for rotation in unison therewith.

In the above described disk drive unit 14, the center spindle 15 is on the same height level as the disk supporting surface 17, as shown in Fig. 2, that is, the forward end of the center spindle 15 is projected above the disk supporting surface 17. Thus the one lateral side of the hub 10 abuts on the forward end of the center spindle 15 and the disk 5 is attracted by the magnet 17 simply by the outer peripheral surface of the main body of the disk 5a being guided by the inner peripheral wall of the cartridge 4, such that, even when a relative positioning deviation should be present between the center opening 9 of the disk 5 and the center spindle 15, the disk 5 is attracted by the magnet 17 so as to be attached to the disk table 16 without compensation for such positioning deviation. When the positioning deviation G₁ between the center opening 9 of the disk 5 and the center spindle 15 is not larger than one half the diameter R₁ of the center spindle 15, the center spindle 15 is engaged in the opening 9 with the deviation of the center opening 9 being compensated by a guide surface 15a at the forward end of the center spindle 15 which is shaped arcuately when viewed in elevation.

However, during the process in which the disk 5 is attracted by the magnet 18 so as to be lowered onto the disk table 16, should the relative positioning deviation between the center opening 9 of the disk 5 and the center spindle 15 be larger than one half the diameter of the center spindle 15, as shown in Fig. 3, such deviation cannot be compensated by the guide surface 15a of the center spindle 15. The result is that the center spindle 15 cannot be engaged in the center opening 9 and thus the disk 5 cannot be attached to the disk table 16 with correct centering so that it becomes impossible to perform the disk rotation in unison with disk table rotation.

The conventional practice is to maintain high dimensional accuracy in the outside diameter of the disk 5, the inside diameter of the disk container 6 in the cartridge 4 containing the disk 5 and the position of the positioning holes 13 so as not to produce the deviation in the relative position between the center opening 9 of the disk 5 and the center spindle 15 which is larger than one half the diameter of the center spindle 15 when mounting the disk cartridge 4 within the apparatus.

However, the main body of the disk 5a on which the signal recording surface of the disk 5 is composed mainly of a substrate molded from synthetic material, while the cartridge 4 is composed of the upper and lower halves 2 and 3 similarly molded from synthetic material and abutted and connected to each other, it is extremely difficult to maintain high dimensional accuracy. In addition, the disk 5 and the cartridge 4 are formed separately from each other and hence may undergo fluctuations in the dimensional accuracy resulting from the difference in the manufacture process. Above all, since the disk 5 is formed by a complicated process in which the main body of the disk 5a is formed of synthetic material with the signal recording layer thereon and the hubs 10 is subsequently mounted as by welding to the main body of the disk 5a, it is likely to undergo fluctuations in the outer size or dimension in view of the complicated production process. The result is that the positioning deviation between the center openig 9 of the disk 5 and the center spindle 15 as mentioned hereinabove may be caused during attachment of the disk cartridge 1 to the magnetic recording and/or reproducing apparatus thus making it inpossible to attach the disk 5 to the disk table 16.

### OBJECTS AND SUMMARY OF THE INVENTION

It is a principal object of the present invention to provide a disk drive device enabling the disk to be correctly centered with respect to the disk table and be secured positively to the disk table even when the disk cartridge is to be attached in which the disk and the cartridge are subject to errors in size and hence the relative size of the disk and the cartridge cannot be maintained accurately.

It is another object of the present invention to provide a disk drive device in which strict demand for accuracy in

The size of the disk cartridge is not required so that the manufacture and designing of the disk cartridge may be facilitated.

The disk drive device of the present invention comprises a center spindle engageable in a center opening formed in a disk hub mounted at the center of one surface of a disk, and a disk table including a disk supporting section adapted to rotate together with said center spindle for supporting said one surface of the disk when the center spindle is received within the center opening of the disk hub, and is characterized in that said disk supporting section projects beyond the forward end of said center spindle, and a guide section for said disk hub is provided at said disk supporting section for precentering the center opening within the disk hub against the center spindle, when the disk is lowered onto the disk table, whereby the disk hub is finally centered when the center spindle penetrates into the center opening within the disk hub.

When the disk is lowered towards the disk table, should there be any deviation between the center opening of the hub and the center spindle, the hub is guided along the guide surface provided to the inner periphery of the disk supporting surface of the disk table so as to shift the center opening towards the center spindle to provide for alignment between the center opening and the center spindle, the latter being then engaged in the center opening for attaching the disk onto the disk table.

These and other objects, features and advantages of the present invention will become apparent from the following detailed description of the preferred embodiments that are to be read in conjunction with the accompanying drawings, throughout which like reference numerals identify like elements and parts.

### BRIEF DESCRIPTION OF THE DRAWINGS

Fig. 1 is a perspective view showing a disk cartridge attached to the disk drive device of the present invention.

Fig. 2 is a longitudinal sectional view showing the disk cartridge attached to the conventional disk drive device.

Fig. 3 is a longitudinal sectional view showing the conventinal disk drive device and showing the state in which the disk cartridge is mounted with positioning deviation between the center opening of the hub and the center spindle.

Fig. 4 is a longitudinal sectional view showing the conventional disk drive device and showing the state in which the disk is engaged with the center spindle.

Fig. 5 is a longitudinal sectional view showing the disk drive device according to the present invention.

Fig. 6 is a longitudinal sectional view showing a modified embodiment of the disk drive device according to the present invention.

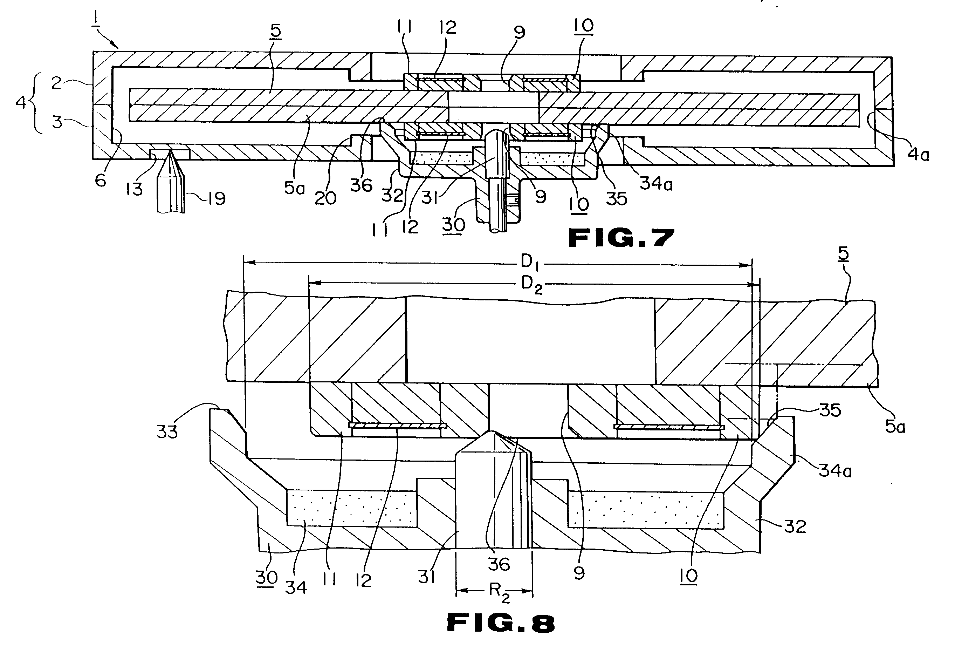

Fig. 7 is a longitudunal sectional view of the disk drive device showing the state of attachment of the disk cartridge.

Fig. 8 is a longitudinal sectional view of the disk drive device showing the state of engagement of hub with the center spindle.

### DESCRIPTION OF THE PREFERRED EMBODIMENTS

In the accompanying drawings, there are illustrated certain preferred embodiments of the present invention.

Similarly to the above described conventional disk drive unit, a disk drive unit 30 according to the present invention is comprised of a center spindle 31 which is engaged in a center opening 9 provided in a hub 10 of a disk 5 contained in a disk cartridge 1 and to which a drive power is transmitted from a rotary drive source, not shown, either directly or through a transmission system, also not shown, and a disk table 32 attached to the outer periphery of the center spindle 31 for rotation in unison with the center spindle 31. This disk table 32 has its upper outer peripheral portion designed as a disk supporting surface 33 supporting the portion of major surface of the main body of the disk 5a around the hub 10 of the disk 5. On the inner periphery of the disk table 32, there is mounted a ring-shaped magnet 34 adapted for producing a uniform magnetic field centered about the center spindle 31 for magnetically attracting the metallic plate 12 mounted to the hub 10.

In order that the signal recording area will face to the optical pickup device when the disk 15 is supported on the disk table 16, the disk table has its outside diameter lesser than that of the non-signal record area on the inner peripheral side of the main body of the disk 5a and its inside diameter larger than the outside diameter of the hub 10, so that the hub 10 may be fitted loosely in the disk table 16.

According to the disk drive unit of the present invention, the disk supporting surface 33 of the disk table 32 is projected above the forward end of the center spindle 31 so that the center spindle 31 is disposed within the interior of the disk table 32. The amount of protrusion of the disk supporting surface 33 is selected to be sufficient to permit the center spindle 31 to be engaged in the center opening 9 of the hub 10 when the major surface of the main body of the disk 5a is supported thereon, and is preferably selected to be as large as possible insofar as the center spindle 31 may sufficiently be engaged in the center opening 9.

A tapered guide surface 35 for the hub 10 is formed on the inner peripheral surface of an upright peripheral wall 34a of the disk table 32 which is the inner periphery of the disk supporting surface 33. This guide surface 35 is formed for extending from the side of the disk supporting surface 33 to at least the same height level as the forward end of the center spindle 21.

The forward end of the center spindle 31 is formed as a center opening guide section 36 having the shape of an arcuately curved surface when seen in side elevation and an angle of inclination substantially equal to 60°.

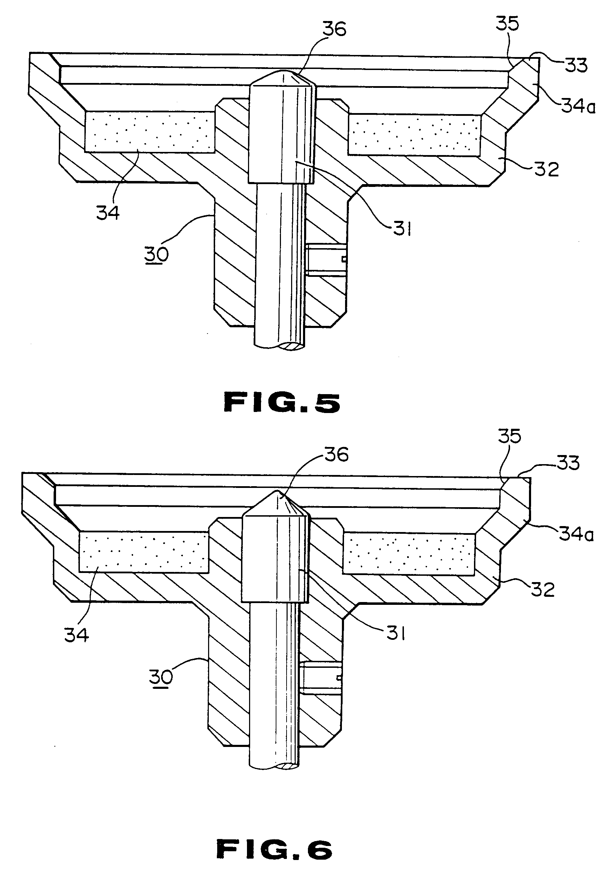

However, the center opening guide section 36 at the forward end of the center spindle 21 need not be provided with a large arcuately curved surface, but may be tapered towards the forward end of the spindle. Also the angle of inclination may also be selected appropriately insofar as such angle permits the guide section to be guided within the center opening 9, as shown in Fig. 6.

The manner in which the disk 5 accommodated in the disk cartridge 1 is attached to the above described disk drive unit is hereafter explained.

The disk cartridge 1 is introduced and placed on the disk drive unit 30 by disk cartridge loading means, not shown, switch is provided along with the disk drive unit 30 to the disk recording and/or reproducing apparatus 30. During the time the disk cartridge 1 is introduced and placed on the disk drive unit 30, the shutter 8 so far closing the opening 7 of the disk cartridge 1 is slid by the loading means to expose the opening 7 so that the disk 5 may face through this opening 7 to the outside of the cartridge 4. The disk 5 within the cartridge 4 follows up with the descent of the cartridge 4 onto the positioning pins 19 provided in the disk recording and/or reproducing apparatus, by virtue of the aforementioned loading means, and is lowered onto the disk table 32, while the metallic plate 12 attached to the hub 10 exposed to the outside through the opening 7 is attracted by the magnet 34.

As the cartridge 4 is lowered onto the positioning pins 19, the disk 9 is lowered onto the disk table 32, as the outer peripheral surface of the main body of the disk 5a is guided along the inner wall 4a of the disk container 6 within the cartridge 4. The cartridge is then supported on the positioning pins 19, with the portion of the major surface of the disk substrate 5a around the hub 10 being supported by the disk supporting surface 17 on the upper side of the disk table 16. At this time, the disk is caused to clear the rib 20 within the cartridge 4 so as to be floated within the cartridge 4. During the time the disk 5 is floated within the cartridge 4 in this manner, the metallic plate 12 mounted to the hub 10 is attrated by the magnet 34, so that the disk 5 is shifted horizontally until the center opening 9 is aligned with the center spindle 31 to provide for centering of the center spindle 31 relative to the center opening 9 so that the center spindle 31 will be engaged in the center opening 9. The disk 5 is attached to the disk drive unit 30 with the major surface portion of the main body of the disk 5a around the hub 10 being supported on the disk supporting surface 33 on the upper side of the disk table 32 in its entirety. The disk 5 is mounted in such manner integrally to the disk table 32 so as to be rotated in unison therewith.

In the above described disk drive unit, even when the relative position of the center opening 9 of the disk 5 and the center spindle 31 is deviated a distance equal to more than one half the diameter R₂ of the center spindle 31, the center opening 9 is shifted towards the center spindle 31 on the condition that the outer peripheral side end of the hub 10 may be abutted onto the guide surface 35 formed on the disk table 32, the hub 10 then being guided on this guide surface 35.

In more detail, since the disk supporting surface 33 of the disk table 32 is projected beyond the forward end of the center spindle 31, the center spindle 31 in not in contact with the center opening 9 and-thus is not engaged as yetin the center opening 9, insofar as the hub 10 is guided by the guide surface 35. Therefore, if the difference between the inside diameter D₁ of the disk table 32 and the outside diameter D₂ of the hub 10 is set so as to be not larger than one half the diameter R₂ of the center spindle 31, the deviation of the center opening 9 relative to the center spindle 31 can be compensated so as to be within one half the diameter R₂ of the center spindle 31 on the condition that the deviation caused is such that the outer peripheral side end of the hub 10 is able to abut on the guide surface 35 formed on the disk table 32, the hub 10 then being guided on the guide surface 35 so as to be shifted towards the center spindle 31. The metallic plate 12 mounted to the hub 10 is subjected to the force of attraction of the magnet 34 so that the disk 5 is shifted horizontally until the central opening 5 is aligned with the center spindle 31 to provide for centering of the center opening 9 with respect to the center spindle 31 so that the center spindle 31 will be engaged in the center opening 9 to permit attachment to the disk drive unit.

From the foregoing it is seen that the present invention provides a disk drive unit in which the disk substrate supporting surface of the disk table supporting the major surface of the disk substrate and making a rotation in unison with the center spindle is projected beyond the forward end of the center spindle, and in which the inner peripheral side of the disk substrate supporting surface is formed with the guide surface for the hub, the latter may be guided by the guide surface when the disk is lowered onto the disk table, even if a larger deviation exists between the center opening of the hub and the center spindle, so that the center opening may be moved towards the center spindle to provide for centering between the center opening and the center spindle such that the center spindle may be engaged with the center opening to permit disk attachment to the disk table. Therefore, even when the disk and the cartridge are subject to errors in the relative size and thus the disk cartridge having only an insufficient dimensional accuracy is mounted to the recording and/or reproducing apparatus, the disk may be positively mounted to the disk as it is correctly centered with respect to the disk. On the other hand, since the larger tolerance may be allowed in the dimensional accuracy of the disk cartridge, production and designing of the disk cartridge may be facilitated.

## Claims

1. A disk drive device (30) comprising a center spindle (31) engageable in a center opening (9) formed in a disk hub (10) mounted at the center of one surface of a disk (5), and a disk table (32) including a disk supporting section (33) adapted to rotate together with said center spindle (31) for supporting said one surface of the disk (5) when the center spindle is received within the center opening of the disk hub,
**characterized** in that
said disk supporting section (33) projects beyond the forward end of said center spindle, and a guide section (35) for said disk hub (1) is provided at said disk supporting section for precentering the center opening within the disk hub against the center spindle, when the disk is lowered onto the disk table, whereby the disk hub is finally centered when the center spindle penetrates into the center opening within the disk hub.

2. The disk drive device according to claim 1 wherein said guide section is adapted to guide the outer periphery of said disk hub in a direction in which said center spindle is engaged in said center opening of said disk hub.

3. The disk drive device according to claim 2 wherein said guide section is formed for extending from the disk supporting surface side of said disk supporting section to the same height level as the forward end of said center spindle.

4. The disk drive device according to claim 3 wherein said guide section is a surface inclined towards the inside of said disk table.

5. The disk drive device according to claim 1 wherein the difference between the inside diameter of said disk table and the outside diameter of said disk hub is not larger than one half the diameter of said center spindle.

6. The disk drive device according to claim 1 wherein the outer peripheral side of said disk table is formed with an upright peripheral wall and said disk supporting section is formed in said upright peripheral wall.

7. The disk drive device according to claim 6 wherein said disk hub is formed by a metallic plate and a ring member of the synthetic material to which said metallic plate is attached.

8. The disk drive device according to cliam 7 wherein the inner peripheral side of said disk table is fitted with a magnet adapted for attracting said metallic plate.

9. The disk drive device according to claim 8 wherein said magnet is in the form of a ring for producing a uniform magnetic field centered about said center spindle.

10. The disk drive device according to claim 1 wherein said disk table is so arranged that the portion of said one surface of said disk around the disk hub is supported by said disk supporting section.

11. The disk drive device according to claim 2 wherein the forward end of said cener spindle is so arranged that said disk hub is guided by said guide section in a direction in which the center spindle is engaged in said center opening so as to be then engaged in the perimeter of said center opening.

12. The disk drive device according to claim 8 wherein the forward end of said center spindle is arcuate.

## Patentansprüche

1. Plattenantriebsgerät (30) mit einer Zentrierachse (31), die in eine Mittelöffnung (9) eingreifen kann, die in einer Plattennabe (10) ausgebildet ist, die in der Mitte einer Oberfläche der Platte (5) angebracht ist, und mit einem Plattenteller (32) mit einem Plattenträgerabschnitt (33), der so ausgebildet ist, daß er sich zusammen mit der Zentrierachse (31) dreht, um eine Fläche der Platte (5) zu tragen, wenn die Zentrierachse in der Mittelöffnung der Plattennabe aufgenommen ist;
**dadurch gekennzeichnet**, daß sich der Plattenträgerabschnitt (33) über das Vorderende der Zentrierachse hinaus erstreckt und ein Führungsabschnitt (35) für die Plattennabe (1) am Plattenträgerabschnitt vorhanden ist, um die Mittelöffnung innerhalb der Plattennabe gegenüber der Zentrierachse vorzuzentrieren, wenn die Platte auf den Plattenteller abgesenkt wird, wodurch die Plattennabe schließlich zentriert wird, wenn die Zentrierachse in die Mittelöffnung innerhalb der Plattennabe eingreift.

2. Plattenantriebsgerät nach Anspruch 1, bei dem der Führungsabschnitt so ausgebildet ist, daß er den Außenumfang der Plattennabe in einer Richtung führt, in der die Zentrierachse in die Mittelöffnung der Plattennabe eingreift.

3. Plattenantriebsgerät nach Anspruch 2, bei dem der Führungsabschnitt so ausgebildet ist, daß er sich von der Seite der Plattenträgerfläche des Plattenträgerabschnitts bis zur selben Höhe wie das Vorderende der Zentrierachse erstreckt.

4. Plattenantriebsgerät nach Anspruch 3, bei dem der Führungsabschnitt eine Oberfläche ist, die zur Innenseite des Plattentellers hin geneigt ist.

5. Plattenantriebsgerät nach Anspruch 1, bei dem der Unterschied zwischen dem Innendurchmesser des Plattentellers und dem Außendurchmesser der Plattennabe nicht größer ist als die Hälfte des Durchmessers der Zentrierachse.

6. Plattenantriebsgerät nach Anspruch 1, bei dem die Außenumfangsseite des Plattentellers mit einer hochstehenden Umfangswand ausgebildet ist und der Plattenträgerabschnitt an der hochstehenden Umfangswand ausgebildet ist.

7. Plattenantriebsgerät nach Anspruch 6, bei dem die Plattennabe aus einer Metallplatte und einem Ringteil aus Kunststoff ausgebildet ist, an dem die Metallplatte befestigt ist.

8. Plattenantriebsgerät nach Anspruch 7, bei dem die Innenumfangswand des Plattentellers mit einem Magneten versehen ist, der so ausgebildet ist, daß er die Metallplatte anzieht.

9. Plattenantriebsgerät nach Anspruch 8, bei dem der Magnet in Form eines Rings vorliegt, um ein gleichförmiges Magnetfeld zu erzeugen, das um die Zentrierachse zentriert ist.

10. Plattenantriebsgerät nach Anspruch 1, bei dem der Plattenteller so ausgebildet ist, daß der Abschnitt der einen Fläche der Platte um die Plattenabe vom Plattenträgerabschnitt getragen wird.

11. Plattenantriebsgerät nach Anspruch 2, bei dem das Vorderende der Zentrierachse so ausgebildet ist, daß die Plattennabe durch den Führungsabschnitt in einer Richtung geführt wird, in der die Zentrierachse in die Mittelöffnung eingreift, um dann in die äußere Begrenzung der Mittelöffnung einzugreifen.

12. Plattenantriebsgerät nach Anspruch 8, bei dem das Vorderende der Zentrierachse bogenförmig ist.

## Revendications

1. Appareil (30) d'entraînement de disque, comprenant une broche centrale (31) destinée à pénétrer dans une ouverture centrale (9) formée dans un moyeu (10) de disque monté au centre d'une surface d'un disque (5), et une platine (32) de support de disque comprenant un tronçon (33) de support de disque destiné à tourner avec la broche centrale (31) pour le support de la première face du disque (5) lorsque la broche centrale est logée dans l'ouverture centrale du moyeu du disque,
caractérisé en ce que :
le tronçon (33) de support de disque dépasse au-delà de l'extrémité avant de la broche centrale, et un tronçon (35) de guidage du moyeu (1) du disque est placé dans le tronçon de support de disque afin qu'il assure un centrage préalable de l'ouverture centrale du moyeu du disque par rapport à la broche centrale, lorsque le disque descend vers la platine de support de disque, si bien que le moyeu du disque est finalement centré lorsque la broche pénètre dans l'ouverture centrale formée dans le moyeu du disque.

2. Appareil d'entraînement de disque selon la revendication 1, dans lequel le tronçon de guidage est destiné à guider la périphérie externe du moyeu du disque dans un sens dans lequel la broche vient pénétrer dans l'ouverture centrale du moyeu du disque.

3. Appareil d'entraînement de disque selon la revendication 2, dans lequel le tronçon de guidage est formé afin qu'il dépasse du côté de la surface de support de disque du tronçon de support de disque à la même hauteur que l'extrémité avant de la broche centrale.

4. Appareil d'entraînement de disque selon la revendication 3, dans lequel le tronçon de guidage a une surface inclinée vers l'intérieur de la platine.

5. Appareil d'entraînement de disque selon la revendication 1, dans lequel la différence entre le diamètre interne de la platine et le diamètre externe du moyeu du disque ne dépasse pas la moitié du diamètre de la broche centrale.

6. Appareil d'entraînement de disque selon la revendication 1, dans lequel le côté périphérique externe de la platine a une paroi périphérique verticale, et le tronçon de support de disque est formé dans cette paroi périphérique verticale.

7. Appareil d'entraînement de disque selon la revendication 6, dans lequel le moyeu du disque est formé par une plaque métallique et un organe annulaire d'une matière de synthèse auquel la plaque métallique est fixée.

8. Appareil d'entraînement de disque selon la revendication 7, dans lequel le côté périphérique interne de la platine est muni d'un aimant destiné à attirer la plaque métallique.

9. Appareil d'entraînement de disque selon la revendication 8, dans lequel l'aimant est sous forme d'un anneau destiné à créer un champ magnétique uniforme centré autour de la broche centrale.

10. Appareil d'entraînement de disque selon la revendication 1, dans lequel la platine est disposée afin que la partie de la première surface du disque entourant le moyeu du disque soit supportée par le tronçon de support de disque.

11. Appareil d'entraînement de disque selon la revendication 2, dans lequel l'extrémité avant de la broche centrale est disposée de manière que le moyeu du disque soit guidé par le tronçon de guidage dans le sens dans lequel la broche pénètre dans l'ouverture centrale de manière qu'elle coopère avec le périmètre de l'ouverture centrale.

12. Appareil d'entraînement de disque selon la revendication 8, dans lequel l'extrémité avant de la broche centrale est courbe.
